# EUROPÄISCHE PATENTSCHRIFT

(11) **EP 2 462 688 B1**
(45) Veröffentlichungstag und Bekanntmachung des Hinweises auf die Patenterteilung: **04.05.2016**
(21) Anmeldenummer: 10722372.9
(22) Anmeldetag: 09.06.2010
(51) Int. Cl.: H02M 7/06, H01L 29/872

(54) **GLEICHRICHTERANORDNUNG**
RECTIFIER ARRANGEMENT
ENSEMBLE REDRESSEUR

(30) Priorität: 05.08.2009 DE 102009028246
(43) Veröffentlichungstag der Anmeldung: 13.06.2012
(73) Patentinhaber: Robert Bosch GmbH, 70442 Stuttgart (DE)
(72) Erfinder: WOHLFARTH, Michael, 70839 Gerlingen (DE); GOERLACH, Alfred, 72127 Kusterdingen (DE)
(86) Internationale Anmeldenummer: PCT/EP2010/058081
(87) Internationale Veröffentlichungsnummer: WO 2011/015396

(56) Entgegenhaltungen:
- WO-A2-2011/007073
- US-A- 5 608 616
- US-A- 5 780 996
- US-B2- 7 084 610
- Ned Mohan, Tore M. Undeland, William P. Robbins: "Power Electronics, Converters, Applications and Design - Third Edition", 2003, John Wiley & Sons, Inc., U.S.A., XP002622055, ISBN: 0-471-22693-9 Seiten 16-17, Seite 17, Zeilen 1-3; Abbildungen 2-1b
- SAKAI T ET AL: "EXPERIMENTAL INVESTIGATION OF DEPENDENCE OF ELECTRICAL CHARACTERISTICS ON DEVICE PARAMETERS IN TRENCH MOS BARRIER SCHOTTKYDIODES", PROCEEDINGS OF THE 10TH INTERNATIONAL SYMPOSIUM ON POWER SEMICONDUCTOR DEVICES & IC'S. ISPSD '98. KYOTO, JUNE 3 - 6, 1998; [INTERNATIONAL SYMPOSIUM ON POWER SEMICONDUCTOR DEVICES & IC'S], NEW YORK, NY : IEEE, US, 3. Juni 1998 (1998-06-03), Seiten 293-296, XP000801083, DOI: DOI:10.1109/ISPSD.1998.702691 ISBN: 978-0-7803-4752-6

## Beschreibung

### Stand der Technik

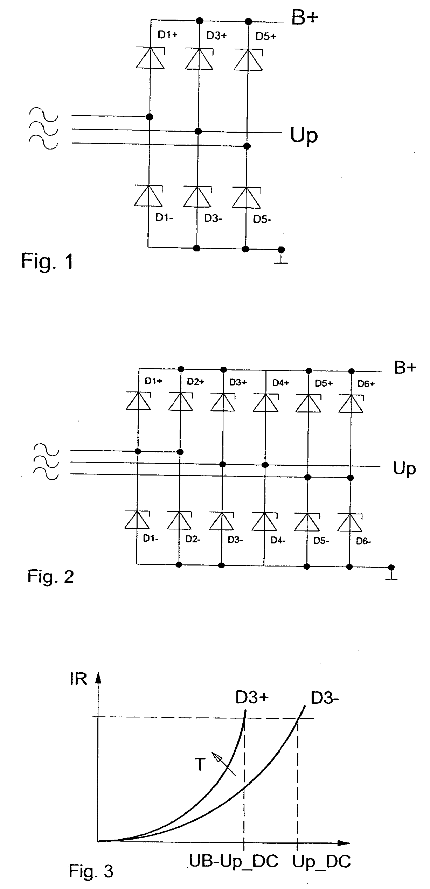

Die Erfindung betrifft eine Auslegung eines Gleichrichters für einen Generator eines Kraftfahrzeugs. Bei Drehstromgeneratoren bzw. Lichtmaschinen insbesondere in Kraftfahrzeugen werden zur Gleichrichtung meist B6-Wechselstrombrücken als Gleichrichter verwendet. Dabei werden als gleichrichtende Elemente meist 6 pn-Halbleiterdioden aus Silizium verwendet. Ein Beispiel einer solchen Anordnung zeigt Figur 1.

Gelegentlich werden auch Wechselstrombrücken eingesetzt, die mehr als 6 Dioden beinhalten. Beispielsweise werden bei sehr großen Strömen Brücken mit parallel geschalteten Dioden verwendet. Eine mögliche Anordnung ist als Schaltbild in Figur 2 gezeigt.

Die Halbleiterdioden werden dabei meist als Z-Dioden ausgelegt. Dieser Fall wird für die beiden Abbildungen im Schaltbild angenommen. Ein komplettes Generatorsystem enthält neben dem Drehstromgenerator und der Wechselstrombrücke noch einen Spannungsregler, der dafür sorgt, dass die gleichgerichtete Spannung einen bestimmten Wert, z. B. 14,3V aufweist. Der Spannungsregler steuert dabei den Erregerstrom des Generators. Übersteigt die Generatorspannung den gewünschten Wert, unterbricht der Regler den Erregerstrom. Die Erregung wird schwächer und die Generatorspannung sinkt. Unterschreitet die Generatorspannung einen unteren Sollwert, schaltet der Regler den Erregerstrom wieder ein. Der Erregerstrom wird über Schleifringe der Erregerwicklung des Generators zugeführt. Generatoren mit Multifunktionsreglern beziehen den Erregerstrom direkt von der positiven Klemme **B+.** Die Elemente des Spannungsreglers sind meist monolithisch in Silizium integriert.
Im Startfall schaltet der Regler einen von der Batterie gespeisten Vorerregerstrom ein. Sobald sich der Läufer des Generators dreht, erfasst der Regler ein Spannungssignal **Up** an einem Phasenanschluss. Aus dessen Frequenz kann der Regler die Generatordrehzahl ableiten. Beim Erreichen einer eingestellten Einschaltdrehzahl schaltet der Regler den vollen Erregerstrom ein, so dass der Generator beginnt Strom zuliefern.

Damit der Spannungsregler die Drehzahl des Läufers erkennt, muss der Wechselstromanteil des Phasensignals **Up_AC** eine gewisse Mindestspannung aufweisen. Außerdem darf der Gleichstromanteil **Up_DC** des Phasensignals meist eine bestimmte Schwelle nicht überschreiten, da die Auswerteschaltung des Reglers häufig nur bis zu einem bestimmten Spannungswert funktioniert. So kann die minimal notwendige Phasenwechselspannung **Up_AC** z. B. 3Volt, gemessen von Spitze zu Spitze und der maximal auftretende Gleichstromanteil **Up_DC** 8Volt betragen.

Während des Vorerregertaktens, wenn der Generator noch keinen Strom in das Bordnetz liefert, bzw. wenn noch keine Gleichrichtung erfolgt, werden Gleichstrom- und Wechselspannungswert der Phasenspannung von den Sperrströmen der Gleichrichterdioden beeinflusst. In diesem Betriebszustand liegt die Batteriespannung UB an der Klemme **B+.** Fließen durch die Dioden dieselben Sperrströme (Reihenschaltung), beträgt die Phasenspannung **Up_DC** = U B/2.
Dabei wurde angenommen dass der Innenwiderstand des Reglers zwischen Phasenabgriff und Masse unendlich groß sei. Dies ist üblicherweise nicht der Fall, sondern der Regler weist zwischen Phasenabgriff und Masse einen Widerstand von z. B. 1- 100kΩ auf. Dieser Widerstand ist z. B. zur Diode **D3** beim Beispiel nach Figur 1 parallel geschaltet. Für die weitere Betrachtung soll aus Übersichtlichkeitsgründen sein Einfluss aber vernachlässigt werden. Der Verlauf des Sperrstroms IR einer pn-Diode aus Silizium ist stark temperaturabhängig und nimmt mit steigender Sperrspannung zu. Dazu zeigt "S.M. Sze, "Physics of Semiconductor Devices", John Wiley & Sons, New York, 1981, p. 91" Näheres. Dies ist auch in Figur 3 dargestellt.

Da jeweils Plus- und Minusdioden in Reihe geschaltet sind, ändert sich die Phasenspannung **Up_DC** wenn sich die Plus- und Minusdioden an Stellen unterschiedlicher Temperatur befinden. Bei hohen Sperrströmen der Plusdiode kann im Extremfall der Gleichstromanteil **Up_DC** der Phasenspannung Werte über der maximal zulässigen Schwelle einnehmen. Dies führt dazu, dass der Regler die Startdrehzahl nicht oder zu spät erkennt und den Generator nicht oder erst bei höheren Drehzahlen einschaltet.

Nachteilig ist, dass durch unterschiedliche Sperrströme der pn-Dioden, hervorgerufen z. B. durch unterschiedliche Diodentemperaturen, der Gleichstromanteil **Up_DC** der Phasenspannung über den maximal zulässigen Wert ansteigen kann und dass damit das Anlaufverhalten des Generators nicht mehr gewährleistet wird.

Aus der US-7,084,610 B2 ist eine Generatoranordnung für ein Fahrzeug dargestellt, in der als Gleichrichterbrücke eine B6-Brücke aus Schottky-Dioden eingesetzt wird. Zur Spannungsbegrenzung wird eine in Sperrichtung geschaltete Z-Diode eingesetzt. Sie begrenzt somit die Betriebsspannung gegenüber vom Generator stammenden Störungen und gegenüber Störimpulsen.

### Offenbarung der Erfindung

Die Erfindung betrifft eine Gleichrichteranordnung nach dem Anspruch 1.

Die Erfindung hat den Vorteil, dass die Mängel des vorstehend genannten Standes der Technik behoben werden. Dabei kann mit der erfindungsgemäßen Lösung sichergestellt werden, dass der Gleichstromanteil der Phasenspannung **Up_DC** sicher auf einem kleinen Spannungswert festgehalten wird.

Werden an Stelle von pn-Gleichrichterdioden gleichrichtende Element verwendet, deren Sperrstrom im Bereich von Spannungen unterhalb der Batteriespannung UB praktisch keine Abhängigkeit von der Sperrspannung zeigen, kann durch eine geeignet Auslegung des Gleichrichters sichergestellt werden, dass die Gleichstrom-Phasenspannung während des Vorerregertaktens des Reglers sicher unterhalb einer gewissen Schwelle bleibt. Als geeignete gleichrichtende Elemente bieten sich insbesondere neuartige Schottkydioden an, bei denen der spannungsabhängige Anteil des Sperrstroms weitgehend unterdrückt werden kann. Der Sperrsättigungstrom ist konstant. Beispiele sind Trench-MOS Barrier-Junction Dioden (TMBS Dioden) oder Trench-Junction-Barrier-Schottky-Dioden TJBS.

### Zeichnung

Die Figuren der Zeichnung zeigen im einzelnen: Figur 1 ein Schaltbild einer B6-Brückengleichrichteranordnung, Figur 2 ein Schaltbild einer B6-Brückengleichrichteranordnung mit parallel geschalten Dioden, Figur 3 typische Sperrkennlinien von pn-Dioden. Dabei befindet sich die Diode D3+ auf einer höheren Temperatur als die Diode D3-, bzw. weist konstruktions- oder fertigungsbedingt einen höheren Sperrstrom auf, Figur 4 typische Sperrkennlinien von erfindungsgemäßen Gleichrichterelementen mit spannungsunabhängigem Sperrsättigungsstrom. Dabei weist das Element D3-auf einen höheren Sperrstrom auf, als D3+. Die vernachlässigbar kleine Phasenspannung Up_DC bei Reihenschaltung der spannungsunabhängigen Elemente zwischen Batterie mit Batteriespannung UB und Masse ist ebenfalls eingezeichnet und

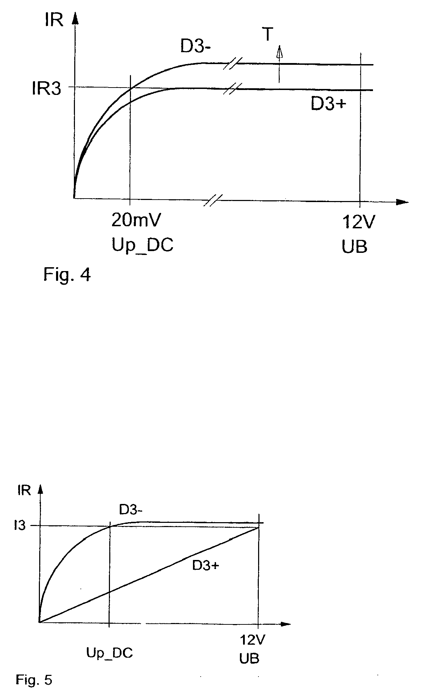

Figur 5 typische Sperrkennlinien im Gleichrichter bei Kombination von pn-Dioden und von erfindungsgemäßen Gleichrichterelementen mit spannungsunabhängigem Sperrsättigungsstrom Dabei weist das Element D3- im gesamten Spannungsbereich von 0V bis UB einen höheren Sperrstrom auf, als die pn-Diode D3+. Die vernachlässigbar kleine Phasenspannung Up_DC bei Reihenschaltung der spannungsunabhängigen Elemente zwischen Batterie mit Batteriespannung UB und Masse ist ebenfalls eingezeichnet.

### Detaillierte Beschreibung von Aufbau und Funktion der Erfindung mit möglichen Alternativen

In Fig. 4 ist ein zu Fig. 3 analoges Strom-Spannungsverhalten eines erfindungsgemäßen sperrspannungsunabhängigen Gleichrichterelementes skizziert. Dabei wird deutlich, dass bei der Reihenschaltung zweier solcher Elemente die Batteriespannung **UB** fast vollständig über dem Element mit dem niedrigeren Sperrstrom abfällt, da durch beide Dioden etwa derselbe Strom I3 fließt.

In einem ersten Ausführungsbeispiel werden in einer Gleichrichteranordnung nach Fig.1 bzw. Fig.2 TMBS-Dioden verwendet, wobei mindesten die Plusdioden **D3+,** bevorzugt aber alle Plusdioden **D1+** bis **D6+,** einen deutlich niedrigeren Sperrsättigungsstrom als die Minusdiode **D3-,** bzw. alle Minusdioden **D1-** bis **D6,** aufweisen. In Folge des niedrigeren Sperrstroms der Plusdioden kann bei der Reihenschaltung von Plus- und Minusdioden gemäß **Fig.1** oder **Fig.2** der Dioden-Sperrsättigungsstrom bei den Minusdioden nicht erreicht werden. Der Spannungsabfall an den Minusdioden bleibt gering. Damit ist der Gleichspannungsanteil des Phasensignals **Up_DC** sehr klein.

In einem weitern Ausführungsbeispiel werden wieder gleichrichtende Elemente mit spannungsunabhängigem Sperrsättigungssperrstrom, wie z. B. TMBS-Dioden, in einer Gleichrichteranordnung eingesetzt, allerdings wird die thermische Auslegung des Gleichrichters so ausgeführt, dass die Minusdioden bevorzugt an den heißen Bereichen des Gleichrichters angebracht sind. Da der Sperrsättigungsstrom mit der Temperatur zunimmt, wird der Sperrsättigungsstrom der Minusdioden weiter erhöht und damit die Phasenspannung **Up_DC** sicher bei kleinen Werten gehalten.

In einem dritten Ausführungsbeispiel werden pn-Dioden mit gleichrichtenden Elementen mit spannungsunabhängigem Sperrstrom, wie z. B. TMBS-Dioden, kombiniert. Dabei werden die Minusdioden eines Gleichrichters nach **Fig. 1** bzw. **Fig. 2** mit TMBS-Dioden und die Plusdioden mit herkömmlichen pn-Dioden ausgestattet. Die Sperrströme von TMBS und pn-Dioden werden so gewählt, dass für alle vorkommenden Diodentemperaturen im Bereich 0V bis UB, der Sperrsättigungsstrom der TMBS-Dioden höher ist als der Sperrstrom der pn-Dioden. Dies ist in Fig. 5 illustriert.

In einem vierten Ausführungsbeispiel wird in einem Gleichrichter nach Fig.2, der parallel geschaltete TMBS-Dioden enthält, zumindest eines der parallel geschalteten Diodenpaare durch eine Parallelschaltung von pn- und TMBS-Diode ersetzt. Dabei werden die Sperrströme des parallel geschalteten Elements von TMBS und pn-Diode wieder so gewählt, dass für alle vorkommenden Diodentemperaturen im Bereich 0V bis UB der Sperrsättigungsstrom der TMBS-Dioden höher als der Sperrstrom der pn-Dioden ist. Der Gleichrichter wird so ausgelegt, dass das für das Diodenpaar mit parallel geschalteter pn- und TMBS-Diode Minusdioden gewählt werden und dass die dazugehörigen Plusdioden einen niedrigeren Sperrstrom aufweisen.

## Patentansprüche

1. Gleichrichteranordnung für einen Generator eines Kraftfahrzeugs, wobei ein Erregerstrom des Generators durch einen Spannungsregler eingestellt wird, mit einer Brückenanordnung mit einer vorgebbaren Anzahl von Gleichrichterelementen, wobei die Brückenanordnung eine Phasenspannung zur Verfügung stellt anhand dessen der Spannungsregler bei einer Vorerregertaktung beim Start des Generators die Generatordrehzahl ableitet, **dadurch gekennzeichnet, dass** mindestens ein Gleichrichterelement (D1+ - D6-) ein Gleichrichterelement mit zumindest unterhalb der Batteriespannung praktisch sperrspannungsunabhängiger Kennlinie ist, so dass eine Gleichstrom-Phasenspannung während der Vorerregertaktung unterhalb einer vorgegebenen Schwelle bleibt.

2. Gleichrichteranordnung nach Anspruch 1, **dadurch gekennzeichnet, dass** die Gleichrichterelemente (D1+ - D6-) in Reihe geschaltete Plus- und Minus-Dioden sind.

3. Gleichrichteranordnung nach Anspruch 2, **dadurch gekennzeichnet, dass** mindestens eine der Minus-Dioden einen höheren Sperrsättigungsstrom als die dazugehörige Plus-Diode aufweist.

4. Gleichrichteranordnung nach einem der Ansprüche 2 oder 3; **dadurch gekennzeichnet, dass** mindestens eine der Minus-Dioden an einer Stelle im Gleichrichter platziert wird, bei der die Temperatur im vergleich zur Temperatur der mit der mindestens einen der Minus-Dioden entsprechend in Reihe geschelteten Plus-Dioden erhöht ist.

5. Gleichrichteranordnung nach einem der Ansprüche 2 bis 4, **dadurch gekennzeichnet, dass** wenigstens eine Plus-Diode durch eine herkömmlich pn-Diode ersetzt ist.

6. Gleichrichteranordnung nach einem der vorhergehenden Ansprüche, **dadurch gekennzeichnet, dass** mindestens ein Gleichrichterelement (D1+ - D6-) eine Parallelschaltung von zwei Gleichrichterelementen enthält, wobei mindestens eines der parallel geschalteten Gleichrichterelemente aus einer Kombination einer pn-Diode mit einem Gleichrichter-Element mit sperrspannungsunabhängiger Kennlinie besteht.

7. Gleichrichteranordnung nach einem der nach einem der vorhergehenden Ansprüche, **dadurch gekennzeichnet, dass** als Gleichrichterelement (D1+ - D6-) mit sperrspannungsunabhängiger Kennlinie eine TMBS-Diode eingesetzt wird.

8. Gleichrichteranordnung nach einem der nach einem der vorhergehenden Ansprüche, **dadurch gekennzeichnet, dass** als Gleichrichterelement (D1+ - D6-) mit sperrspannungsunabhängiger Kennlinie eine TJBS-Diode eingesetzt wird.

9. Gleichrichteranordnung nach einem der vorhergehenden Ansprüche, **dadurch gekennzeichnet, dass** das Gleichrichterelement (D1+ - D6-) mit sperrspannungsunabhängiger Kennlinie durch eine elektronische Schaltung realisiert ist.

## Claims

1. Rectifier arrangement for a generator of a motor vehicle, wherein an excitation current of the generator is set by a voltage regulator, comprising a bridge arrangement comprising a predefinable number of rectifier elements, wherein the bridge arrangement provides a phase voltage, on the basis of which the voltage regulator derives the generator rotational speed upon a pre-excitation clocking upon the start of the generator, **characterized in that** at least one rectifier element (D1+ - D6-) is a rectifier element having a characteristic curve which, at least below the battery voltage, is practically independent of reverse voltage, such that a DC phase voltage remains below a predefined threshold during the pre-excitation clocking.

2. Rectifier arrangement according to Claim 1, **characterized in that** the rectifier elements (D1+-D6-) are positive and negative diodes connected in series.

3. Rectifier arrangement according to Claim 2, **characterized in that** at least one of the negative diodes has a higher reverse saturation current than the associated positive diode.

4. Rectifier' arrangement according to either of Claims 2 and 3, **characterized in that** at least one of the negative diodes is positioned at a location in the rectifier at which the temperature is increased in comparison with the temperature of the positive diodes correspondingly connected in series with the at least one of the negative diodes.

5. Rectifier arrangement according to any of Claims 2 to 4, **characterized in that** at least one positive diode is replaced by a conventional pn diode.

6. Rectifier arrangement according to any of the preceding claims, **characterized in that** at least one rectifier element (D1+ - D6-) contains a parallel connection of two rectifier elements, wherein at least one of the rectifier elements connected in parallel consists of a combination of a pn diode with a rectifier element having a reverse-voltage-independent characteristic curve.

7. Rectifier arrangement according to any of the preceding claims, **characterized in that** a TMBS diode is used as a rectifier element (D1+ - D6-) having a reverse-voltage-independent characteristic curve.

8. Rectifier arrangement according to any of the preceding claims, **characterized in that** a TJBS diode is used as a rectifier element (D1+ - D6-) having a reverse-voltage-independent characteristic curve.

9. Rectifier arrangement according to any of the preceding claims, **characterized in that** the rectifier element (D1+ - D6-) having a reverse-voltage-independent characteristic curve is realized by an electronic circuit.

## Revendications

1. Ensemble redresseur destiné à un générateur d'un véhicule automobile, dans lequel un courant d'excitation du générateur est réglé par un régulateur de tension, comportant un montage en pont ayant un nombre pouvant être prédéfini d'éléments redresseurs, dans lequel le montage en pont fournit une tension de phase sur la base de laquelle le régulateur de tension déduit la vitesse de rotation du générateur pour un cadencement d'excitation préalable lors du démarrage du générateur, **caractérisé en ce qu'**au moins un élément redresseur (D1+ - D6-) est un élément redresseur présentant au moins en pratique, en-dessous de la tension de batterie, une caractéristique indépendante de la tension de blocage, de manière à ce qu'une tension de phase à courant continu, pendant le cadencement d'excitation préalable, reste inférieure à un seuil prédéterminé.

2. Ensemble redresseur selon la revendication 1, **caractérisé en ce que** les éléments redresseurs (D1+ - D6-) sont des diodes plus et moins connectées en série.

3. Ensemble redresseur selon la revendication 2, **caractérisé en ce qu'**au moins l'une des diodes moins présente un courant de blocage de saturation supérieur à celui de la diode plus associée.

4. Ensemble redresseur selon l'une quelconque des revendications 2 ou 3, **caractérisé en ce qu'**au moins l'une des diodes moins est placée dans le redresseur en un point où la température est élevée par comparaison à la température des diodes plus connectées en série d'une manière qui correspondant à l'au moins une des diodes moins.

5. Ensemble redresseur selon l'une quelconque des revendications 2 à 4, **caractérisé en ce qu'**au moins une diode plus est remplacée par une diode pn classique.

6. Ensemble redresseur selon l'une quelconque des revendications précédentes, **caractérisé en ce qu'**au moins un élément redresseur (D1+ - D6-) contient un circuit parallèle de deux éléments redresseurs, dans lequel au moins l'un des éléments redresseurs connectés en parallèle est constitué d'une combinaison d'une diode pn et d'un élément redresseur ayant une caractéristique indépendante de la tension de blocage.

7. Ensemble redresseur selon l'une quelconque des revendications précédentes, **caractérisé en ce qu'**on utilise en tant qu'élément redresseur (D1+ - D6-) ayant une caractéristique indépendante de la tension de blocage une diode TMBS.

8. Ensemble redresseur selon l'une quelconque des revendications précédentes, **caractérisé en ce qu'**on utilise en tant qu'élément redresseur (D1+ - D6-) ayant une caractéristique indépendante de la tension de blocage une diode TJBS.

9. Ensemble redresseur selon l'une quelconque des revendications précédentes, **caractérisé en ce que** l'élément redresseur (D1+ - D6-) ayant une caractéristique indépendante de la tension de blocage est constitué d'un circuit électronique.
